# EUROPEAN PATENT APPLICATION

(11) **EP 1 018 714 A2**
(43) Date of publication of application: **12.07.2000**
(21) Application number: 99310287.0
(22) Date of filing: 21.12.1999
(51) Int. Cl.: G07G 1/14

(54) **POS system based on multi-point data entry**

(30) Priority: 08.01.1999 JP 333699
(71) Applicant: NCR INTERNATIONAL INC., Dayton, Ohio 45479 (US)
(72) Inventor: Matou, Toshiaki, Chiba 273-0012 (JP)
(74) Representative: Williamson, Brian

(57) **Abstract**

A POS system is described which has multi-point data entry comprising two or more satellite POS terminal units for registering and entering purchased commodities and temporarily storing commodity sale data for a plurality of customers. The system also includes at least one master POS unit for communicating with the satellite POS terminal units and receiving the commodity sale data of the customers to conduct payment business for the cost of commodity selling transactions. Finally the system also includes a store control unit for unitarily managing POS data concerning commodity items handled in a store and collecting count data of the commodity selling transactions with the customers by communicating with the at least one master POS unit while supplying PLU data such as selling prices concerning the registered commodities by communicating with the individual satellite POS terminal unit.

## Description

The present invention relates to a cash register or a point of sales system (hereinafter referred to as "POS" generically) and in particular to a system including a bar code scanning function for registering and entering purchased commodities on the basis of commodity codes installed in a retail store etc

In a conventional POS system, registration and entry of purchased commodities and payment processing for the purchase cost are generally in the same unit. Because of this, particularly in the time slot in which a crowd of shoppers gather in a grocery counter etc. of a supermarket, there have been long lines of shoppers at the installation place of the POS system due to such the registration of the selling commodities and the cost payment so that this situation has made the customers wait for a long time.

In order to reduce such congestion of shoppers even a little, a two person type POS system has been devised and carried out. An example of a two persons type POS system is indicated in Japanese Patent Publication No.59-13067. In view of requiring a relatively long time to deliver money for the cost payment after the registration and entry processing of the purchased commodities is completed, a cash register in which means for registering and entering the purchased commodities and means for paying the cost in one POS system are separated is disclosed in the above Publication.

However, in a conventional two persons type POS system in which a registration and entry part of purchased commodities and a cost payment part are simply separated in the fixed state of 1 to 1, since there are many items of the purchased commodities per customer in the case of a store having a relatively wide counter area of handling commodities such as groceries, it takes a long time to process the registration and entry of the purchased commodities so that selling processing of the commodities cannot be performed speedily. Also, in the case of cost payment using a credit card, it takes a long time to conduct cost settlement business for one customer so that this situation will make the customer in which the registration and entry of the purchased commodities are completed wait for its business at the shopping lane.

The present invention is devised in view of a problem with the above prior art of the conventional two persons type POS system in which a registration and entry part of purchased commodities and a cost payment part are simply separated in the fixed state of "1 to 1". In order to associate two or more (m) satellite POS terminal units for working registration and entry of the commodities with one or more (n) master POS units for taking charge of these satellite POS terminal units to process cost payment in the flexibly unfixed state of "m to n" and provide flexibility in an installation place of the satellite POS terminal units and the master POS units and implement elimination of restriction of the mutual place relationship between both the units, the present invention is to provide a POS system based on multi-point data entry comprising two or more satellite POS terminal units for registering and entering purchased commodities and temporarily storing plural customers of commodity sale data every customer, master POS units for communicating with the satellite POS terminal units and receiving the commodity sale data of the customers to conduct payment business for the cost of commodity selling transactions, and a store control unit for unitarily managing POS data concerning commodity items handled in a store and collecting to count data of the commodity selling transactions with the customers by communicating with the one or more master POS units while supplying PLU data such as selling prices concerning the registered commodities by communicating with the individual satellite POS terminal unit.

Here, each of the satellite POS terminal units and the master POS units is identified by unique identification numbers, and the communication among the satellite POS terminal units, the master POS units and the store control unit mutually is performed by sending and receiving communication data including said identification numbers on the basis of a predetermined wireless communication protocol.

For this purpose, the satellite POS terminal units comprises input means including a scanner for registering and entering purchased commodities, display means for displaying a commodity name, its price and a purchase sum when each commodity is registered, storage means for temporarily storing commodity sale data for a plurality of customers, communication means for providing wireless communication with the master POS units and the store control unit, a controller for controlling these means. Next, the master POS units comprises communication means for communicating with the satellite POS terminal units and the store control unit, storage means for temporarily storing commodity sale data received from each of the satellite POS terminal units in charge, display means for displaying a sale receipt sum and a change sum of each customer concerning cost payment, money receipt means for receiving cash, and a controller for controlling these means.

Then, the satellite POS terminal units and the master POS units also have customer identification means such as magnetic card reader for identifying customers mutually, and cost payment of the customers concerning commodity purchase in the master POS units is made by identifying the customers using the customer identification means.

The master POS units further comprises credit settlement means for conducting credit business to settle the cost by a credit card.

Also, the store control unit comprises communication means for providing wireless communication with the satellite POS terminal units and the master POS units, PLU storage means for storing PLU data such as selling prices concerning the commodities registered and entered in the satellite POS terminal units, POS data storage means for storing POS data such as commodity selling transactions with each customer in the master POS units, data output means for displaying or printing the PLU data and the POS data, and a controller for controlling these means.

Here, in order to associate two or more satellite POS terminal units for working registration and entry of the commodities with one or more master POS units for processing cost payment in the flexibly unfixed state, payment for the cost of commodity purchase of the customers in which registration and entry of purchased commodities are completed in each of the satellite POS terminal units can be made in any of the master POS units constructing the system. Also, one of the master POS units is grouped so as to take charge of predetermined amounts of the satellite POS terminal units, and cost payment for customers in which registration and entry of commodities are completed in each of the satellite POS terminal units may be made in the master POS units taking charge of said satellite POS terminal units as a rule, and cost payment may be made in other master POS units not in charge according to the number of unsettled cost payments in said satellite POS terminal units in charge.

An embodiment f the present invention will now be described, by way of example, with reference to the accompanying drawings, in which:
Figure 1 is a schematic construction of a POS system based on multi-point data entry according to the present invention;
Figure 2 is a summary of contents of data and message sent and received among main business and units in each component unit of the present system;
Figure 3 is settings of various functions of satellite POS terminal units and master POS units;
Figures 4A and 4B are flowcharts of main business of satellite POS terminal units and master POS units, respectively;
Figure 5 is details of various business contents of satellite POS terminal units;
Figure 6 is a list of a method of wireless indoor communication used in the present system;
Figure 7 is an example of hardware construction in satellite POS terminal units;
Figure 8 is an example of hardware construction in master POS units; and
Figure 9 is an example of hardware construction in a store control unit.

A POS system based on multi-point data entry in accordance with the present invention will be described in detail with reference to the drawings below.

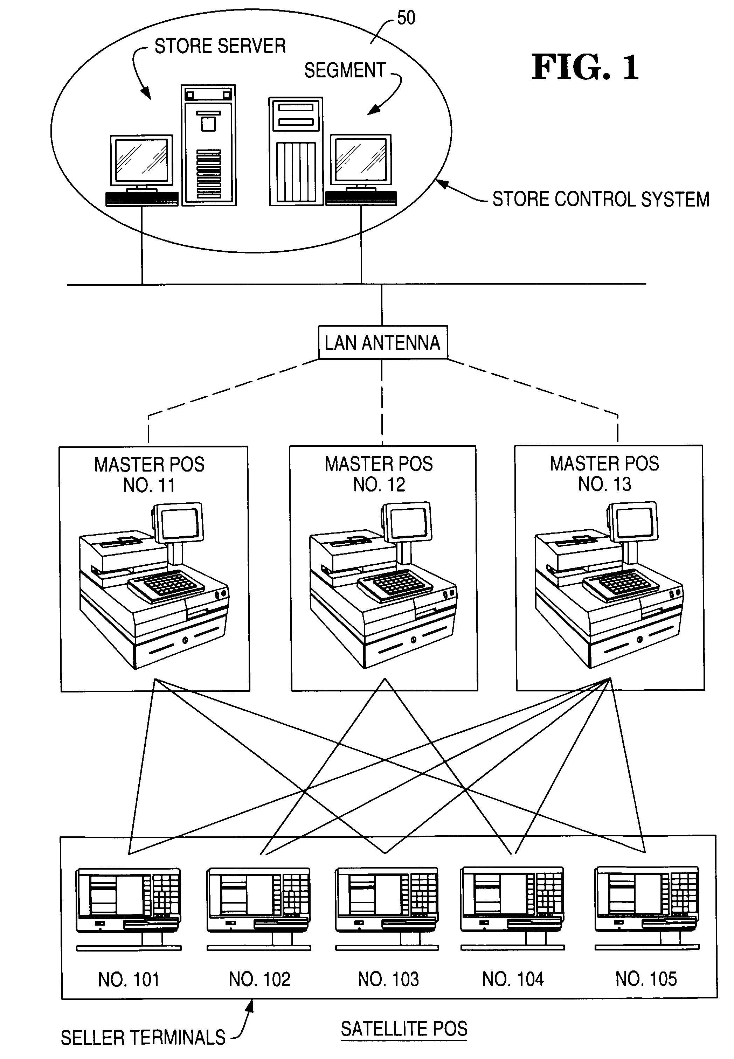

Figure 1 is a schematic construction of the POS system based on multi-point data entry in accordance with the present application. This shows the POS system based on multi-point data entry comprising five salesperson terminal units No. 101 to 105 which are satellite POS terminal units for conducting registration business of commodities purchased by customers, master POS units No. 11 to 13 for communicating with each of the salesperson terminal units and receiving the commodity sale data of the customers to conduct payment business for the cost of commodity selling transactions and issue receipts or slips and the like, and a store control unit for unitarily managing POS data concerning commodity items handled in a store and collecting to count data of the commodity selling transactions with the customers by communicating with the master POS units while supplying PLU data such as selling prices concerning the registered commodities by communicating with the individual salesperson terminal unit.

Here, the commodity selling data for every customer registered in the salesperson terminal units No. 101 to 105 is called by polling operations through the master POS units No. 11 to 13. Association as to whether each master POS unit takes charge of any of the salesperson terminal units is set in each master POS unit. The association of each master POS unit with each salesperson terminal unit is performed using terminal numbers of the salesperson terminal units. Thus, the terminal numbers of the salesperson terminal units need to be a unique number in the system. By setting the terminal numbers of the salesperson terminal units, an IP address of the salesperson terminal units may be generated.

The number of salesperson terminal units capable of setting in the master POS units is not limited by setting of applications. Timing for sending the commodity selling data from the salesperson terminal units to the master POS units is determined according to request commands from the master POS units. Thus, the number of master POS units is limited from the viewpoint of the salesperson terminal units in the present system.

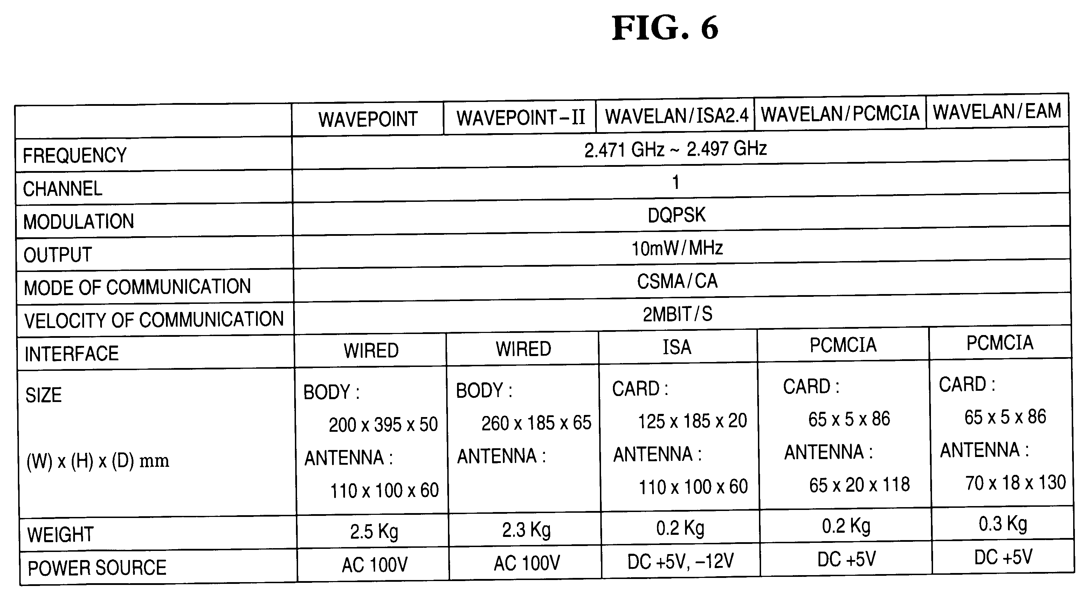

In this manner, each of the salesperson terminal units No. 101 to 105 and the master POS units No. 11 to 13 is identified by unique identification numbers. Also, the communication among the salesperson terminal units, the master POS units and the store control unit mutually is performed by sending and receiving communication data including said identification numbers on the basis of a predetermined wireless communication protocol. A summary of the wireless communication used in the POS system based on multi-point data entry in accordance with the present invention will be described with reference to the accompanying drawing of Figure 6 below.

In the present system thus, registration business of the purchased commodities of the customers is separated from cost payment business of the purchased commodities and further a registration and entry part of the purchased commodities and a cost payment part are not simply separated in the fixed state of "1 to 1" as the conventional two persons type POS system, and two or more (m) satellite POS terminal units for working registration and entry of the commodities are associated with one or more (n) master POS units for taking charge of these satellite POS terminal units to process cost payment in the flexibly unfixed state of "m to n" together with introduction of mutual wireless communication, with the result that it is constructed so as to provide flexibility in an installation place of the satellite POS terminal units and the master POS units and eliminate restriction of the mutual place relationship between both the units.

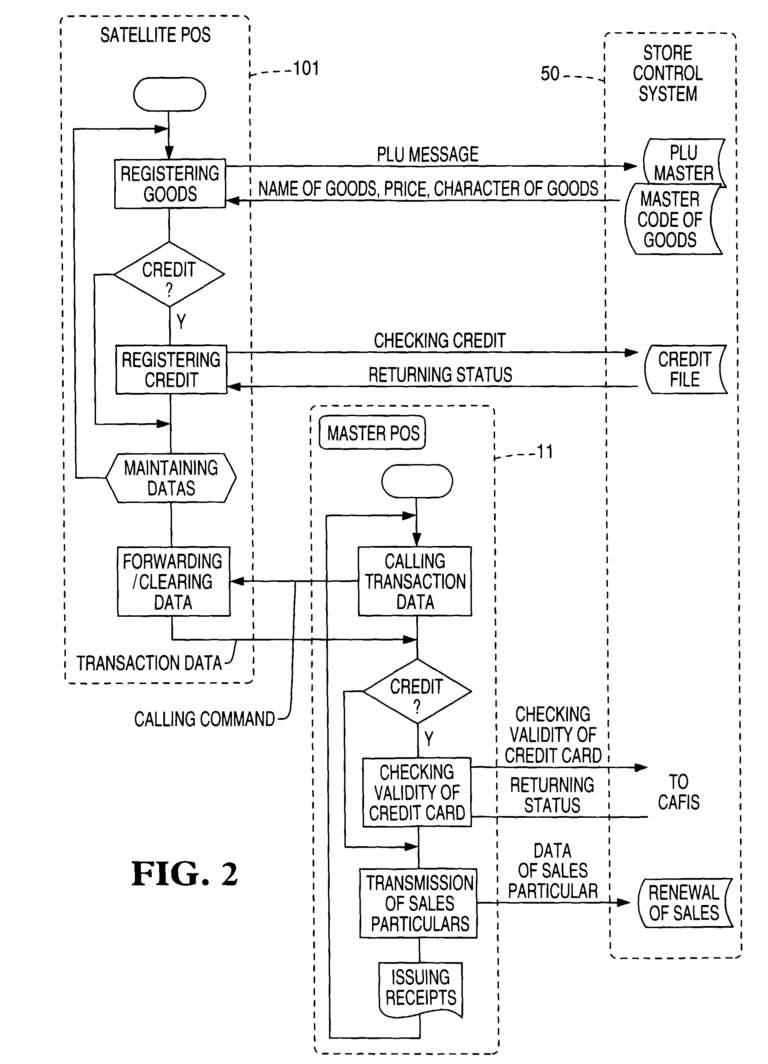

Figure 2 shows a summary of contents of data and message sent and received among main business and units in each component unit of the present system.

The registration processing of each purchased commodity in a satellite POS terminal unit 101 is performed without intervention of a master POS unit 11. That is, whenever a scanner included by the satellite POS terminal unit 101 scans a commodity code, the commodity code of said purchased commodity is sent to a store control unit 50 (S10).

The store control unit 50 receives this and returns commodity information such as a commodity name or a selling price concerning said commodity code from a PLU file stored in storage means within the system to said satellite POS terminal unit 101 (S11). The satellite POS terminal unit 101 displays said commodity name on an operator display and a customer display and further registers its name in buffer memory within the self-unit of the purchased commodity. The registration processing is performed on all the purchased commodities of said customer. After the satellite POS terminal unit 101 inquires for a negative check of credit to the side of the store control unit 50 in the case of credit processing (S12, S13), the terminal unit 101 completes the registration business of the purchased commodities of said customer. Commodity purchase data of every customer is stored in buffer memory within the satellite POS terminal unit 101 by plural customers (for example, three customers).

The customer in which the registration of the purchased commodities is completed moves to the installation place of the master POS unit 11 in order to pay for the cost of the purchased commodities. When a plurality of master POS units 11 are installed in a store, the customer moves toward an installation place of the master POS units. Here, the customer may select the master POS unit 11, which is the nearest and uncrowded payment place. In the master POS unit 11, the customer to be paid is validated and then the commodity purchase data of said customer is read out by communication access to the satellite POS terminal unit in which said customer has registered the purchased commodities (S14). In validation or identification of the customer, the satellite POS terminal unit 101 may specify specific customer number and the master POS unit 11 may validate it at the time of registering the purchased commodities, or the customer may be identified by a magnetic card etc. which said store issues and the customer carries. In this manner, the identification of the customer is performed.

As another manner of the customer identification between the satellite POS terminal unit 101 and the master POS unit 11, the satellite POS terminal unit 101 may specify the master POS unit 11 to be paid at the time of registering the purchased commodities.

Also, one of the master POS units is grouped so as to take charge of predetermined amounts of the satellite POS terminal units 101, and cost payment for customers in which registration and entry of commodities are completed in each of the satellite POS terminal units 101 may be made in the master POS units 11 taking charge of said satellite POS terminal units 101 as a rule, and cost payment may be made in other master POS units not in charge according to the number of unsettled cost payments in said satellite POS terminal units 101 in charge. In the customer identification of this case, the validation of the customer number or customer identification means such as the magnetic card as described above will be used.

The satellite POS terminal unit 101 sends the commodity purchase data of said customer according to a send request from the master POS unit 11 (S15). A total of the commodity purchase are displayed on a display of the master POS unit 11 and payment for the cost of the commodity purchase is made according to this display. The payment for the cost of the commodity purchase may be made not only by cash, of course, but also by a credit card or a debit card. In the case of the cost payment by the credit card, said master POS unit 11 inquires for credit of the credit card of said customer to the store control unit 50 (S16). The store control unit 50 inquires for availability of the credit card of said customer to an external credit check agency and answers its result (S17). In this manner, the payment for the cost of the commodity purchase of said customer is made. A detail bill and a receipt of the commodity purchase are issued by said master POS unit 11. At the same time, data of the purchased commodities is sent to the store control unit 50 (S18) and is used for management such as sales and stocks every commodity.

The store control unit 50 supplies commodity data such as its commodity name and its price every registration by scanning of the purchased commodities of the customer to each satellite POS terminal unit 101 in the system on the basis of PLU file data managed by self, but the store control unit 50 does not need to manage directly the satellite POS terminal unit 101 since a direct management object is only the master POS unit 11.

In the satellite POS terminal unit 101, journal data of registration commodities is stored in storage means such as a hard disk and retrieval may be performed. While commodity registration data is sent to the master POS unit 11, said journal data is sent out and is issued as journal data in the side of the master POS unit 11. In the journal data issued here, an identification number of the satellite POS terminal unit is provided in order to identify which satellite POS terminal unit has registered transactions. By this, retrospective retrieval of the journal data stored in the hard disk of the satellite POS terminal unit registered and entered may be performed when the journal data is retrieved.

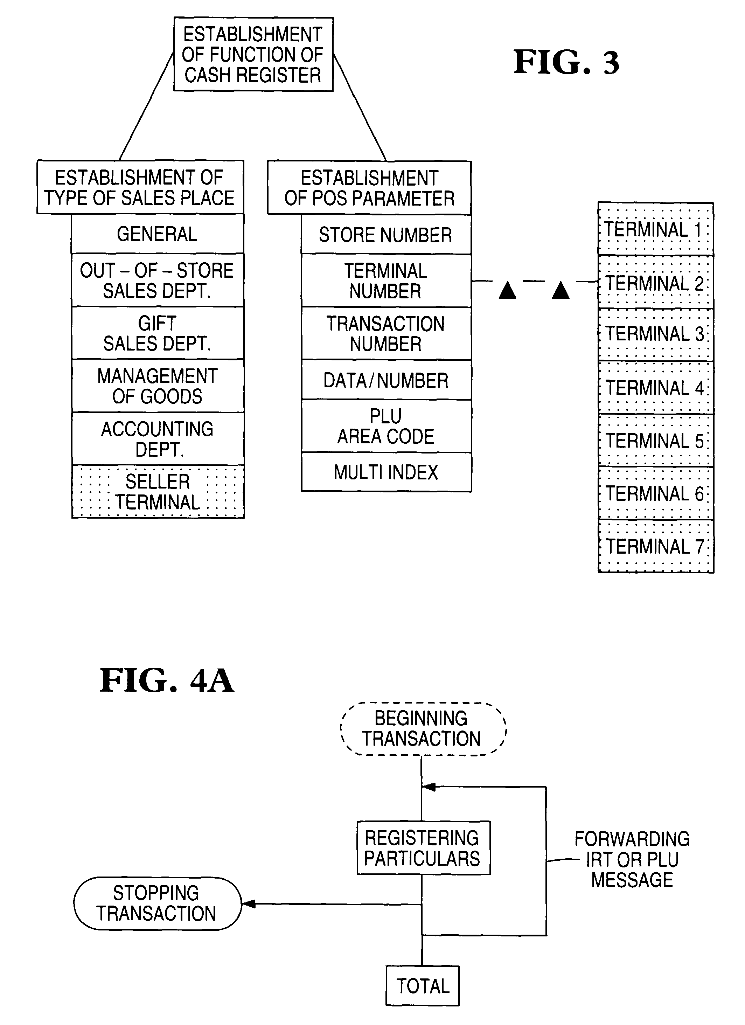

Figure 3 shows set items of various functions of satellite POS terminal units and master POS units when using the present system.

In the satellite POS terminal unit, parameter set items such as general register, foreign merchant register, gift register, commodity management register and accounting register are used as set items of counter type.

In the master POS unit, parameter set items such as store number, terminal number, transaction number, date/time, PLU area code and multi-index are used as POS parameter set items. Here, only seven units are identified as the number of satellite POS terminal units in charge.

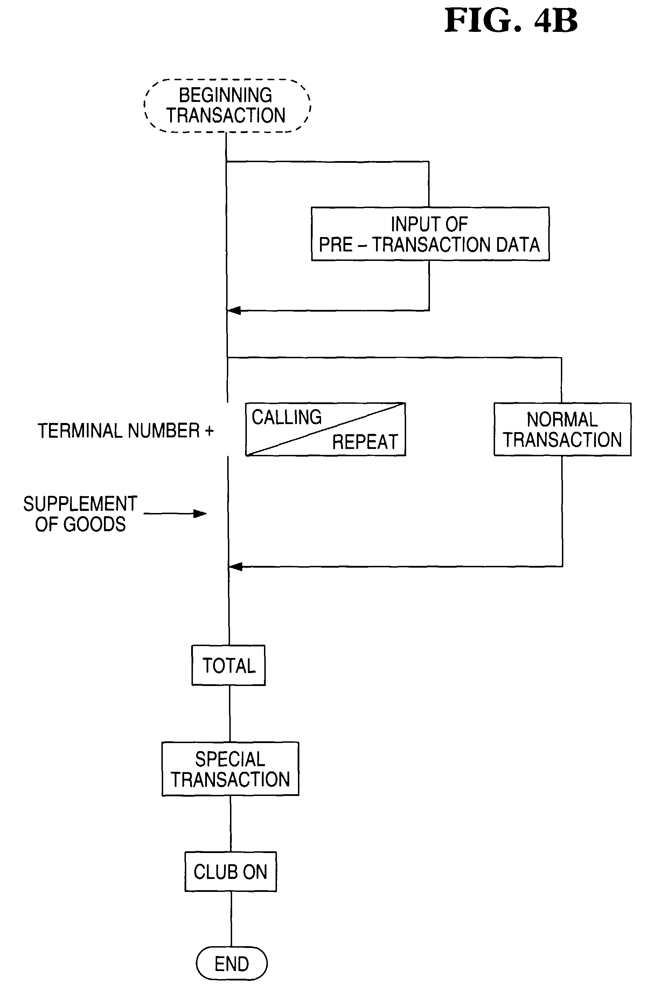

Figures 4A and 4B show flowcharts of main business of satellite POS terminal units and master POS units, respectively.

Figure 4A shows a flow of main business of satellite POS terminal units. On a "sales/return" screen, "transaction start" is selected and entry to a commodity registration business flow is made. If scanning registration of the purchased commodities of one customer is completed, entry to commodity registration processing of next customer is made by pressing a "sum key". Here, if commodity registration data up to three customers, for example, may be stored, it is set so as to apply error processing to commodity registration of the fourth transaction.

Figure 4B shows a flow of main business of master POS units. Here, if a "salesperson terminal unit number" (ID number of satellite POS terminal unit) key and a "registration data call" key are pressed on the "sales/return" screen, the commodity purchase registration data first stored in said terminal unit is read out and its sales sum is displayed on a display to pay for the purchase cost. Then, a sale detail bill and a receipt are issued. Prior to entry of the salesperson terminal unit number, data unique to transactions such as salesperson code, manual input tax sum, acquisition declaration of recognition number is entered as required. Before a sum key is pressed, addition of a purchased commodity, correction of specification and sum of the commodities entered in the salesperson terminal unit may be performed. As described above, identification of the customer between the salesperson terminal units may be made by specification of the customer number or reading of the magnetic card.

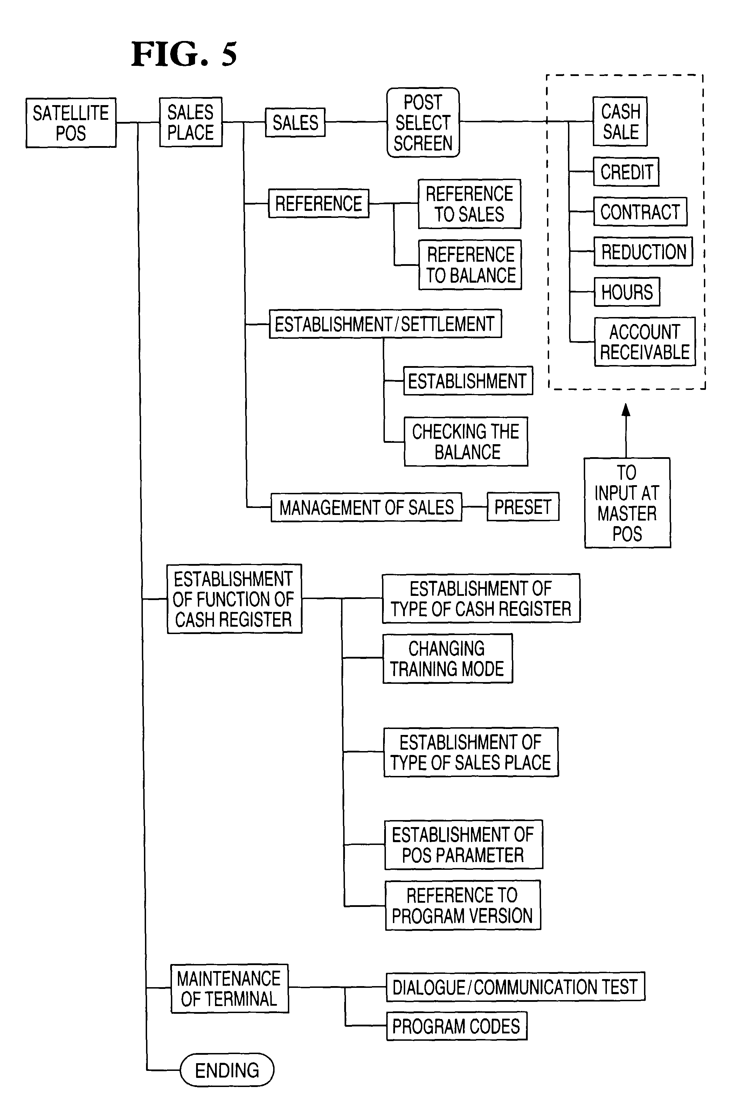

Figure 5 shows details of various business functions of satellite POS terminal units.

Selections of each business function are constructed so as to select the business of lower concept hierarchically by selections of "counter business", "register function setting business", "terminal maintenance business" and "end processing" displayed on a master screen. With respect to the business such as "cash sales", "credit", "contract", "cash on delivery" of the lowest concept, it is set in the master POS units.

Figure 6 shows a list of a method of wireless indoor communication used in the present system.

In order to provide flexibility in an installation place of the satellite POS terminal units and the master POS units and implement elimination of restriction of the mutual place relationship between both the units in the present POS system based on multi-point data entry, each of the satellite POS terminal units and the master POS units is identified by unique identification numbers, and the communication among the satellite POS terminal units, the master POS units and the store control unit mutually is performed by sending and receiving communication data including said identification numbers on the basis of wireless communication protocol called "WaveLan" or "WavePoint" without using cables.

As shown in Figure 6, 2.471 to 2.497 GHz is used as frequency of a communication wireless radio wave. Since a method of spectrum diffusion communication is adopted, the present system may cope with any store environment. However, the method of wireless indoor communication used in the present system is not limited to this method.

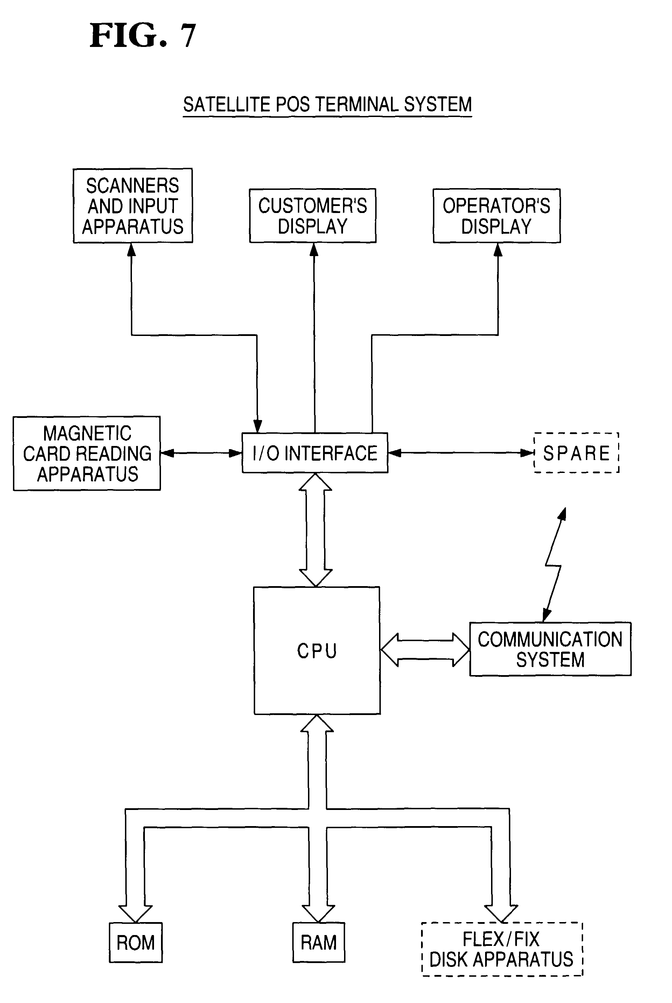

Figure 7 shows an example of hardware construction in satellite POS terminal units.

The satellite POS terminal unit for conducting registration business of commodities purchased by customers comprises at least a scanner and key entry means for reading commodity codes attached to the commodities, and a customer display for making sure of the commodity name and its price of the read commodity by the customer. An operator display displays selection screens for various business/function settings as well as making sure of the commodity name and its price of the read commodity in the same manner of the customer display. A magnetic card reader is not always essential and may be required to identify the customer. Fixed data or programs are stored in ROM. Various application programs or commodity registration data of the customers are stored in a disk unit. These hardware units are connected to a central processing unit through a system bus or an I/O interface and are controlled. The commodity code read by the scanner means is sent to the store control unit through communication means, and the commodity name and its price data to be displayed on the display of said commodity are received.

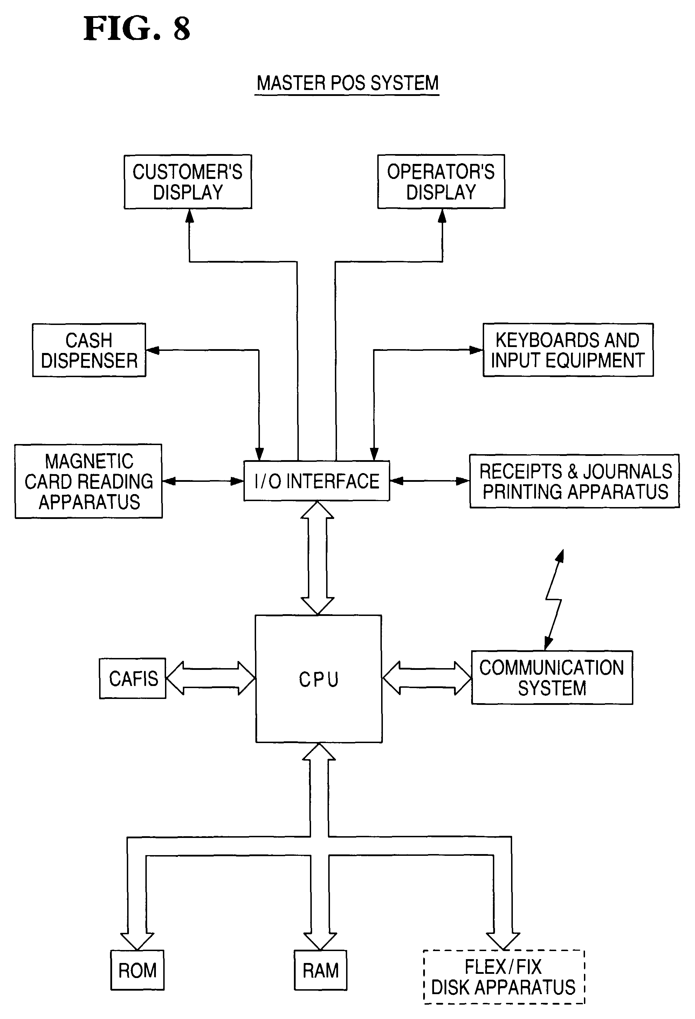

Figure 8 shows an example of hardware construction in master POS units.

The master POS unit for conducting cost payment business according to the registration commodity data registered in the satellite POS terminal unit comprises a money receipt unit for receiving cash, and a receipt printer for issuing sale details and receipts as well as each of the hardware means which the satellite POS terminal unit comprises. If the sales record is printed on paper, a journal printer also is required. If the sales record is recorded on a magnetic medium such as a floppy disk or a hard disk, the journal printer is unnecessary. In addition, the master POS unit may comprise means for paying the cost of commodity sales by a credit card.

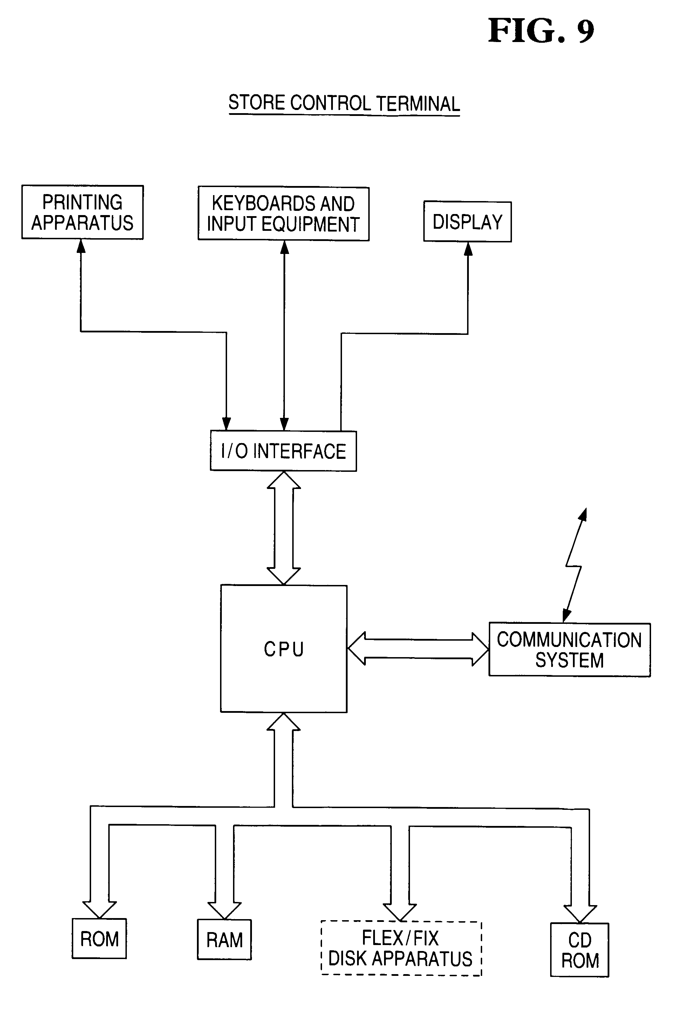

Figure 9 shows an example of hardware construction in a store control unit.

The store control unit functions as a data server in the present system and comprises various storage means, a display unit, a printer, an input unit, communication means, and a central processing unit for controlling these. A PLU file corresponding to commodity codes as well as each application software is stored in the storage means. Since sending of the PLU data simultaneously from plural satellite POS terminal units is requested and answers are performed at a high speed, a workstation capable of high speed processing or a data warehouse type computer capable of parallel processing is suitable.

As described above, since the present POS system based on multi-point data entry comprises two or more satellite POS terminal units for registering and entering purchased commodities and temporarily storing commodity sale data for a plurality of customers, one or more master POS units for communicating with the satellite POS terminal units and receiving the commodity sale data of the customers to conduct payment business for the cost of commodity selling transactions, and a store control unit for unitarily managing POS data concerning commodity items handled in a store and collecting count data of the commodity selling transactions with the customers by communicating with the one or more master POS units while supplying PLU data such as selling prices concerning the registered commodities by communicating with the individual satellite POS terminal unit, the POS system based on multi-point data entry may be implemented so as to associate two or more (m) satellite POS terminal units for working registration and entry of the commodities with one or more (n) master POS units for taking charge of these satellite POS terminal units to process cost payment in the flexibly unfixed state of "m to n" together with introduction of wireless communication mutually between both the units and provide flexibility in an installation place of the satellite POS terminal units and the master POS units and eliminate restriction of the mutual place relationship between both the units.

## Claims

1. A point of sales (POS) system having multi-point data entry comprising:
two or more satellite POS terminal units for registering and entering purchased commodities and temporarily storing commodity sale data for a plurality of customers,
at least one master POS unit for communicating with the two or more satellite POS terminal units and for receiving the commodity sale data of the plurality of customers to conduct payment business for the cost of commodity selling transactions, and
a store control unit for unitarily managing POS data concerning commodity items handled in a store and collecting count data of the commodity selling transactions with the plurality of customers by communicating with the at least one master POS unit while supplying PLU data such as selling prices concerning the registered commodities by communicating with the satellite POS terminal units.

2. A POS system having multi-point data entry as claimed in claim 1, wherein each of the satellite POS terminal units and the at least one master POS unit are identified by unique identification numbers, and communication among the satellite POS terminal units, the master POS unit and the store control unit mutually is performed by sending and receiving communication data including said identification numbers using a predetermined wireless communication protocol.

3. A POS system having multi-point data entry as claimed in claim1 or claim 2, wherein each of the satellite POS terminal units comprises input means including a scanner for registering and entering purchased commodities, display means for displaying a commodity name, its price and a purchase sum when each commodity is registered, storage means for temporarily storing commodity sale data for a plurality of customers, communication means for providing wireless communication with the at least one master POS units and the store control unit, and a controller for controlling the input means, display means, storage means and communication means.

4. A POS system having multi-point data entry as claimed in any preceding claim, wherein the at least one master POS unit comprises communication means for communicating with the satellite POS terminal units and the store control unit, storage means for temporarily storing commodity sale data received from each of the satellite POS terminal units in charge, display means for displaying a sale receipt sum and a change sum of each customer concerning cost payment, money receipt means for receiving cash, and a controller for controlling the communication means, storage means, display means, and money receipt means.

5. A POS system having multi-point data entry as claimed in any preceding claim, wherein the satellite POS terminal units and the at least one master POS unit also have customer identification means for identifying each customer, and cost payment of the customers concerning commodity purchase in the at least one master POS unit is made by identifying each customer using a customer identification means.

6. A POS system having multi-point data entry as claimed in any preceding claim, wherein the satellite POS terminal units and the at least one master POS unit also have customer identification means for identifying each customer, and cost payment of the customers concerning commodity purchase in the at least one master POS unit is made by identifying each customer using a customer identification means.

7. A POS system having multi-point data entry as claimed in any preceding claim, wherein the customer identification means is a magnetic card reading apparatus.

8. A POS system having multi-point data entry as claimed in any preceding claim, wherein the customer identification means is a magnetic card reading apparatus.

9. A POS system having multi-point data entry as claimed in any preceding claim, wherein the at least one master POS unit further comprises credit settlement means for conducting credit business to settle the cost by a credit card.

10. A POS system having multi-point data entry as claimed in any preceding claim, wherein the store control unit comprises communication means for providing wireless communication with the satellite POS terminal units and the at least one master POS unit, PLU storage means for storing PLU data such as selling prices concerning the commodities registered and entered in the satellite POS terminal units, POS data storage means for storing POS data such as commodity selling transactions with each customer in the at least one master POS unit, data output means for displaying or printing the PLU data and the POS data, and a controller for controlling the communication means, PLU storage means, POS data storage means, and data output means.

11. A POS system having multi-point data entry as claimed in any preceding claim, having a plurality of master POS units, wherein payment for the cost of commodity purchase of the customers in which registration and entry of purchased commodities are completed in each of the satellite POS terminal units can be made in any of the plurality of master POS units in the system.

12. A POS system having multi-point data entry as claimed in any preceding claim, having a plurality of master POS units, wherein one of the master POS units is grouped so as to take charge of predetermined amounts of the satellite POS terminal units, and cost payment for customers in which registration and entry of commodities are completed in each of the satellite POS terminal units is made in the master POS unit taking charge of said satellite POS terminal units as a rule, and cost payment is made in another master POS unit not in charge according to the number of unsettled cost payments in said satellite POS terminal units.
